# EUROPEAN PATENT APPLICATION

(11) **EP 3 466 269 A1**
(43) Date of publication of application: **10.04.2019**
(21) Application number: 17806577.7
(22) Date of filing: 29.05.2017
(51) Int. Cl.: A23L 2/00, A23F 3/16, A23F 5/24

(54) **COMPOSITION CONTAINING CAFFEINE AND CYCLOALANYLALANINE**

(30) Priority: 31.05.2016 JP 2016108508
(71) Applicant: Suntory Holdings Limited, Osaka-shi, Osaka 530-8203 (JP)
(72) Inventor: YAMAMOTO, Kenji, Soraku-gun Kyoto 619-0284 (JP); MATSUBAYASHI, Hideki, Kawasaki-shi Kanagawa 211-0067 (JP)
(74) Representative: Vossius & Partner Patentanwälte Rechtsanwälte mbB
(86) International application number: PCT/JP2017/019825
(87) International publication number: WO 2017/209022

(57) **Abstract**

Provided is a composition having a good flavor in which unpleasant bitterness caused by caffeine is suppressed without reducing or removing caffeine in the composition. The caffeine content and the cycloalanylalanine content of the composition are adjusted to specific ranges.

## Description

### TECHNICAL FIELD

The present invention relates to a composition containing caffeine and cycloalanylalanine, and more specifically, to a composition having a caffeine content within a specific range and a cycloalanylalanine content within a specific range, a method for producing the composition, a method for suppressing bitterness of caffeine in the composition, and a method for suppressing astringency of cycloalanylalanine in the composition.

### BACKGROUND ART

Caffeine, which is contained in tea drinks, coffee drinks, and the like as a bitter component, when present to some extent in a drink gives a comfortable stimulus at the time of drinking, but may cause excessive bitterness depending on the content thereof. For this reason, decaffeinated drinks, in which caffeine in the drinks has been reduced or removed, are being developed and sold on the market.

However, since caffeine is one of the important taste components of tea drinks and coffee drinks, a problem is that reducing or removing caffeine impairs good bitterness and cleanness peculiar to caffeine. Hence, techniques for suppressing excessive bitterness caused by caffeine without reducing or removing caffeine have been studied. For example, a method for controlling bitterness of caffeine is known that includes blending at least one selected from the group consisting of gum ghatti, pullulan, gum arabic, and soybean polysaccharides to a composition containing caffeine (PTL 1). In addition, known methods for reducing bitterness of coffee include a method using an α-linked galactooligosaccharide (PTL 2) and a method using a hesperidin glycoside (PTL 3). In particular, as a method for reducing bitterness of very bitter coffee drinks, such as espresso, a method using a potassium salt is known (PTL 4).

### CITATION LIST

### PATENT LITERATURE

PTL 1: Japanese Patent Application Publication No. 2011-078363 A
PTL 2: Japanese Patent Application Publication No. 2003-250486 A
PTL 3: Japanese Patent Application Publication No. H11-318379 A
PTL 4: Japanese Patent Application Publication No. 2010-119386 A

### SUMMARY OF INVENTION

### TECHNICAL PROBLEM

An object of the present invention is to provide a composition having a good flavor in which unpleasant bitterness derived from caffeine and astringency of cycloalanylalanine in the composition are suppressed.

### SOLUTION TO PROBLEM

The present inventors conducted diligent studies on the aforementioned object and as a result, focused on taking advantage of cycloalanylalanine, which is a cyclic dipeptide. First, the present inventors have found that when cycloalanylalanine alone is contained in the composition, the astringency is too strong to ingest the composition in a preferable manner. Surprisingly, however, the present inventors have found that unpleasant bitterness of caffeine can be suppressed without causing unpleasant astringency of cycloalanylalanine by blending a specified amount of cycloalanylalanine, which has strong astringency as described above, into a composition containing a specified amount of caffeine. In addition, it has been found that the composition has a preferable balance between good bitterness peculiar to caffeine and moderate astringency peculiar to cycloalanylalanine. The present invention has been thus accomplished.

More specifically, the present invention relates to, but is not limited to, the following.
(1) A composition having:
   a caffeine content of 1 to 190 mg/100 mL; and
   a cycloalanylalanine content of 0.0006 to 14 mg/100 mL.
(2) The composition according to (1), wherein the cycloalanylalanine content is 0.0020 to 7.0 mg/100 mL.
(3) The composition according to (1) or (2), wherein the caffeine content is 6 to 110 mg/100 mL.
(4) The composition according to any one of (1) to (3), wherein the cycloalanylalanine content (mg/100 mL) (X) and the caffeine content (mg/100 mL) (Y) satisfy Y ≤ 240log₁₀(X) + 720 and Y ≥ 1.5log₁₀(X) + 4.5.
(5) The composition according to any one of (1) to (3), wherein the cycloalanylalanine content (mg/100 mL) (X) and the caffeine content (mg/100 mL) (Y) satisfy all of Y ≤ 50log₁₀(X) + 150, Y ≥ 4log₁₀(X) + 12, and X ≤ 7.0.
(6) The composition according to (3), wherein a ratio between the caffeine content (mg/100 mL) and the cycloalanylalanine content (mg/100 mL), caffeine content/cycloalanylalanine content, is 20 to 5000.
(7) The composition according to any one of (1) to (6), wherein cycloalanylalanine is derived from a heat-treated animal or plant peptide product.
(8) The composition according to (7), wherein the animal or plant peptide is obtained from a soybean peptide, a tea peptide, a malt peptide, a whey peptide, or a collagen peptide.
(9) The composition according to any one of (1) to (8), being a drink.
(10) The composition according to (9), wherein the drink is a coffee drink.
(11) The composition according to (9), wherein the drink is a green tea drink.
(12) The composition according to any one of (9) to (11), being a packaged drink.
(13) A method for producing a composition, the method comprising:
   adjusting a caffeine content of a composition to 1 to 190 mg/100 mL; and
   adjusting a cycloalanylalanine content of the composition to 0.0006 to 14 mg/100 mL.
(14) The method according to (13), comprising adjusting the cycloalanylalanine content of the composition to 0.0020 to 7.0 mg/100 mL.
(15) The method according to (13) or (14), comprising adjusting the caffeine content of the composition to 6 to 110 mg/100 mL.
(16) The method according to any one of (13) to (15), wherein the composition is a drink.
(17) A method for suppressing bitterness of caffeine in a composition, the method comprising:
   adjusting a caffeine content of the composition to 1 to 190 mg/100 mL; and
   adjusting a cycloalanylalanine content of the composition to 0.0006 to 14 mg/100 mL.
(18) A method for suppressing astringency of cycloalanylalanine in a composition, the method comprising:
   adjusting a caffeine content of the composition to 1 to 190 mg/100 mL; and
   adjusting a cycloalanylalanine content of the composition to 0.0006 to 14 mg/100 mL.
(19) The method according to (17) or (18), comprising adjusting the cycloalanylalanine content of the composition to 0.0020 to 7.0 mg/100 mL.
(20) The method according to any one of (17) to (19), comprising adjusting the caffeine content of the composition to 6 to 110 mg/100 mL.
(21) The method according to any one of (17) to (20), wherein the composition is a drink.

### ADVANTAGEOUS EFFECTS OF INVENTION

The present invention can provide a composition having a good flavor in which unpleasant bitterness caused by caffeine and astringency of cycloalanylalanine in the composition are suppressed. In addition, the present invention can actualize a composition having a good balance between good bitterness peculiar to caffeine and astringency peculiar to cycloalanylalanine and having preferable flavor.

### DESCRIPTION OF EMBODIMENTS

### 1. Composition

An aspect of the present invention is a composition having a caffeine content within a specific range and a cycloalanylalanine content within a specific range.

### 1-1. Caffeine

The caffeine content of the composition according to the present invention is not particularly limited, but a too high caffeine content may make it difficult for cycloalanylalanine to provide the effect of suppressing bitterness of caffeine. The lower limit of the caffeine content of the composition according to the present invention is 1 mg or more, preferably 5 mg or more, more preferably 6 mg or more, further preferably 7 mg or more, particularly preferably 10 mg or more, per 100 mL of the composition. The upper limit of the caffeine content of the composition according to the present invention is 190 mg or less, preferably 120 mg or less, more preferably 110 mg or less, further preferably 100 mg or less, particularly preferably 90 mg or less, per 100 mL of the composition. Typically, the range of the caffeine content of the composition according to the present invention is 1 to 190 mg, preferably 5 to 120 mg, more preferably 6 to 110 mg, further preferably 7 to 100 mg, particularly preferably 10 to 90 mg, per 100 mL of the composition.

The caffeine content can be measured by a known method, such as HPLC, LC-MS, GC-MS, LC, GC, and spectroscopy including near-infrared spectroscopy.

There is no particular limitation on the method for adjusting the caffeine content of the composition. The caffeine content can be adjusted by, for example, blending a caffeine-containing raw material (such as foods, drinks, and plants), blending an extract or purified product of the raw material, or blending a product of organic synthesis. For example, a purified product (such as a product having a caffeine content of 98.5% or more) and a crude product (such as a product having a caffeine content of 50% to 98.5%) that can be blended into foods and drinks, as well as an extract of a caffeine-containing plant (such as tea leaves and coffee beans) or a concentrate thereof, may be used as a caffeine-containing raw material in the present invention.

In the present invention, there is no particular limitation on the method for adjusting the caffeine content as long as the caffeine content of the composition falls within the above range. For example, commercially available or synthetic caffeine can be used, or a caffeine-containing raw material (such as foods, drinks, and plants) can be used. Also, only one of commercially available or synthetic caffeine products and caffeine-containing raw materials may be used, or two or more thereof may be used in combination.

### 1-2. Cycloalanylalanine

Cycloalanylalanine in the present invention is one of cyclic dipeptides and is a compound having a diketopiperazine structure produced by dehydration condensation of an amino group and a carboxy group of two alanine molecules.

Cycloalanylalanine in the present invention may be in the form of any one of pharmacologically acceptable salts (including inorganic salts and organic salts). Examples thereof include, but are not limited to, a sodium salt, a potassium salt, a calcium salt, a magnesium salt, an ammonium salt, a hydrochloride, a sulfate, a nitrate, a phosphate, and an organic acid salt (such as acetate, citrate, maleate, malate, oxalate, lactate, succinate, fumarate, propionate, formate, benzoate, picrate, benzenesulfonate, and trifluoroacetate) of cycloalanylalanine. A salt of cycloalanylalanine can be easily prepared by those skilled in the art according to any method known in the art. Herein "cycloalanylalanine or a salt thereof' is sometimes collectively referred to simply as "cycloalanylalanine".

Cycloalanylalanine used in the present invention can be prepared according to a method known in the art. For example, production according to a chemical synthesis method, an enzymatic method, or a microbial fermentation method is possible, synthesis by dehydration and cyclization of linear alanylalanine is possible, and preparation according to the methods described in Japanese Patent Laid-Open No. 2003-252896 and Journal of Peptide Science, 10, 737-737, 2004 is also possible. For example, a heat-treated animal or plant peptide product rich in cycloalanylalanine can be obtained by obtaining an animal or plant peptide by applying an enzyme treatment or a heat treatment to a raw material containing an animal or plant protein to and further applying a high-temperature heat treatment to the obtained animal or plant peptide. In view of these, cycloalanylalanine used in the present invention may be chemically or biologically synthesized or may be obtained from an animal or plant peptide.

The cycloalanylalanine content of the composition according to the present invention is not particularly limited, but a too high cycloalanylalanine content may prevent preferable drinking because of too strong astringency of cycloalanylalanine. The lower limit of the cycloalanylalanine content of the composition according to the present invention is 0.0006 mg or more, preferably 0.0018 mg or more, more preferably 0.0020 mg or more, further preferably 0.005 mg or more, particularly preferably 0.01 mg or more, per 100 mL of the composition. The upper limit of the cycloalanylalanine content of the composition according to the present invention is 14 mg or less, preferably 7.2 mg or less, more preferably 7.0 mg or less, further preferably 5.0 mg or less, particularly preferably 2.4 mg or less, per 100 mL of the composition. Typically, the range of the cycloalanylalanine content of the composition according to the present invention is 0.0006 to 14 mg, preferably 0.0018 to 7.2 mg, more preferably 0.0020 to 7.0 mg, further preferably 0.005 to 5.0 mg, particularly preferably 0.01 to 2.4 mg, per 100 mL of the composition.

The cycloalanylalanine content can be measured by a known method, such as LC-MS/MS.

In the present invention, there is no particular limitation on the method for adjusting the cycloalanylalanine content as long as the cycloalanylalanine content of the composition falls within the above range. For example, a commercially available cycloalanylalanine product can be used, a synthetic cycloalanylalanine product produced by a chemical synthesis method, an enzymatic method, or a microbial fermentation method can be used, or a heat-treated animal or plant peptide product rich in cycloalanylalanine can be used. Also, only one of commercially available or synthetic cycloalanylalanine products and heat-treated animal or plant peptide products rich in cycloalanylalanine may be used, or two or more thereof may be used in combination.

### 1-3. Heat-Treated Animal or Plant Peptide Product

Herein the "animal or plant peptide" is not particularly limited and, for example, a soybean peptide, a tea peptide, a malt peptide, a whey peptide, or a collagen peptide can be used. Among these peptides, a soybean peptide and a tea peptide are preferable in the present invention. The animal or plant peptide may be prepared from an animal- or plant-derived protein or a raw material containing an animal- or plant-derived protein by a known method, or a commercially available peptide may be used.

### 1-3-1. Soybean Peptide

The "soybean peptide" as used herein refers to a low-molecular-weight peptide obtained by applying an enzyme treatment and/or a heat treatment to a soy protein to reduce the molecular weight of the protein. As the soybeans (scientific name: Glycine max) to be used as a raw material, any soybeans can be used without limitation on the cultivar, production area, and the like, and a product in process, such as pulverized soybeans, can be used.

### 1-3-2. Tea Peptide

The "tea peptide" as used herein refers to a tea-derived low-molecular-weight peptide obtained by applying an enzyme treatment and/or a heat treatment to a tea (including tea leaves and used tea leaves) extract to reduce the molecular weight of the protein. As raw material tea leaves to be extracted, portions, drinkable by brewing, of a tea plant (scientific name: Camellia sinensis) such as tea leaves and stems produced therefrom can be used. The form thereof is not limited to large leaves, powder, or the like. The harvest time of tea leaves can be appropriately selected according to desired taste and flavor.

### 1-3-3. Malt Peptide

The "malt peptide" as used herein refers to a malt-derived low-molecular-weight peptide obtained by applying an enzyme treatment and/or heat treatment to an extract obtained from malt or a pulverized material thereof to reduce the molecular weight of the protein. As the malt peptide to be used as a raw material, any malt peptide can be used without limitation on the cultivar, production area, and the like; however, malted barley, which is germinated barley seeds, is particularly suitably used. Herein malted barley is sometimes simply referred to as malt.

### 1-3-4. Whey Peptide

The raw material for the whey peptide is not particularly limited, and examples thereof include a whey protein concentrate (WPC) and a whey protein isolate (WPI), which are whey proteins. The whey peptide is a product obtained by decomposition of such a whey protein using an enzyme or the like. Various degrees of decomposition are possible. If the degree of decomposition is low, there is a tendency for the milk odor to be strong and for the appearance of the liquid after dissolution to be opaque (cloudy). On the other hand, if the degree of decomposition is high, there is a tendency for the appearance of the liquid after dissolution to be transparent and for bitterness and astringency to be increased.

### 1-3-5. Collagen Peptide

The "collagen peptide" as used herein refers to a low-molecular-weight peptide obtained by applying an enzyme treatment and/or heat treatment to collagen or a pulverized material thereof to reduce the molecular weight of the collagen. Collagen is a principal protein of connective tissue of animals and is a protein most abundantly contained in the body of a mammal including a human.

### 1-3-6. Heat-Treated Animal or Plant Peptide Product

As described above, a heat-treated animal or plant peptide product rich in cycloalanylalanine can be obtained by applying a high-temperature heat treatment to an animal or plant peptide. The "high-temperature heat treatment" as used herein means treating at a temperature of 100°C or higher and under a pressure above the atmospheric pressure for a specified period. A pressure-resistant extractor, a pressure vessel, an autoclave, or the like can be used as a high-pressure high-temperature treatment apparatus depending on the conditions.

The temperature in the high-temperature heat treatment is not particularly limited as long as the temperature is 100°C or higher. The temperature is preferably 100 to 170°C, more preferably 110 to 150°C, further preferably 120 to 140°C. This temperature represents a measured value of the outlet temperature of an extraction column when a pressure-resistant extractor is used as a heater, and represents a measured value of the core temperature of the pressure container when an autoclave is used as a heater.

The pressure in the high-temperature heat treatment is not particularly limited as long as the pressure is above the atmospheric pressure. The pressure is preferably 0.101 to 0.79 MPa, more preferably 0.101 to 0.60 MPa, further preferably 0.101 to 0.48 MPa.

The treatment time of the high-temperature heat treatment is not particularly limited as long as a treated product containing cycloalanylalanine can be obtained. The treatment time is preferably about 15 to 600 minutes, more preferably about 30 to 500 minutes, further preferably about 60 to 300 minutes.

The conditions for the high-temperature heat treatment of the animal or plant peptide are not particularly limited as long as a treated product containing cycloalanylalanine can be obtained. The conditions are preferably such that the [temperature:pressure:time] is [100 to 170°C:0.101 to 0.79 MPa:15 to 600 minutes], more preferably [110 to 150°C:0.101 to 0.60 MPa:30 to 500 minutes], further preferably [120 to 140°C:0.101 to 0.48 MPa:60 to 300 minutes].

If desired, a treatment such as filtration, centrifugation, concentration, ultrafiltration, lyophilization, and powderization may be applied to the resulting heat-treated animal or plant peptide product. If the amount of a specified cycloalanylalanine in the heat-treated animal or plant peptide product falls short of a desired content, another animal or plant peptide, a commercially available product, or a synthetic product may be used to appropriately add to make up for the shortage of the specified cycloalanylalanine.

Cycloalanylalanine is reported to have the effect of protecting inflamed intestines and the antiobesity effect (Japanese Patent Application No. 2015-133447 and Japanese Patent Application No. 2015-142654). Hence, the composition according to the present invention may be used as a composition for protection of intestines and/or prevention and improvement of obesity. Also, the composition may be used as a composition with functional claims relating to protection of intestines and/or prevention and improvement of obesity.

### 1-4. Conditions of Caffeine Content and Cycloalanylalanine Content

The composition according to the present invention preferably satisfies the relations between the cycloalanylalanine content (mg/100 mL) (X) and the caffeine content (mg/100 mL) (Y) of Y ≤ 240log₁₀(X) + 720 and Y ≥ 1.5log₁₀(X) + 4.5 in view of the balance between good bitterness peculiar to caffeine and moderate astringency peculiar to cycloalanylalanine. In addition, the composition according to the present invention more preferably satisfies the relations between the cycloalanylalanine content (mg/100 mL) (X) and the caffeine content (mg/100 mL) (Y) of Y ≤ 50log₁₀(X) + 150, Y ≥ 4log₁₀(X) + 12, and X < 7.0.

Also, in another embodiment of the composition according to the present invention, the ratio between the caffeine content (mg/100 mL) and the cycloalanylalanine content (mg/100 mL), caffeine content/cycloalanylalanine content, is preferably 20 to 5000, more preferably 30 to 3000, further preferably 37.5 to 1000 in view of the balance between good bitterness peculiar to caffeine and moderate astringency peculiar to cycloalanylalanine.

### 1-5. Type of Composition

An aspect of the present invention is a composition having a caffeine content within a specific range and a cycloalanylalanine content within a specific range. Preferable ranges of the caffeine content and the cycloalanylalanine content are as described above. By adjusting the caffeine content and the cycloalanylalanine content to the above respective ranges, a composition having a good flavor in which unpleasant bitterness caused by caffeine in the composition is suppressed can be provided. In addition, the present invention can achieve a good balance between good bitterness peculiar to caffeine and astringency peculiar to cycloalanylalanine in the composition and achieve preferable flavor of the composition. The "good balance between good bitterness peculiar to caffeine and astringency peculiar to cycloalanylalanine" as used herein means that unpleasant bitterness of caffeine is suppressed by blending cycloalanylalanine and that unpleasant astringency peculiar to cycloalanylalanine is not felt, so that a good balance between good bitterness of caffeine and moderate astringency of cycloalanylalanine is felt.

The type of the composition according to the present invention is not particularly limited as long as the composition contains caffeine. Examples thereof include drugs (pharmaceutical compositions) and foods and drinks (including foods, drinks, food and drink compositions, food compositions, and drink compositions). The composition according to the present invention is preferably a drink.

The type of the drink according to the present invention is not particularly limited. Examples thereof include tea drinks, coffee drinks, cocoa drinks, carbonated drinks, fruit drinks, vegetable drinks, sports drinks, lactic drinks, alcoholic drinks, energy drinks, functional drinks, flavored water drinks, and jelly drinks. Preferable examples of the drink in the present invention include tea drinks such as green tea, oolong tea, eucommia tea, roasted green tea, blended tea, barley tea, mate, jasmine tea, and black tea and coffee drinks. Green tea drinks or coffee drinks are particularly preferable.

### 1-6. Other Components

Various additives may be blended into the composition according to the present invention in addition to the above components depending on the type of the composition. Examples of the various additives include sweetening agents such as saccharides, acidulants, flavorings, vitamins, coloring matters, antioxidants, emulsifiers, preservatives, extracts, dietary fiber, pH control agents, and stabilizing agents other than the above substances.

### 1-7. Packaged Drink

The drink according to the present invention can be produced by appropriately blending the above components. Also, the drink according to the present invention is subjected to a step such as sterilization as appropriate to provide a packaged drink. For example, a sterilized packaged drink can be produced by performing heat sterilization after filling the drink into a container or by filling the drink into a container under a germfree environment after sterilizing the drink.

The type of the container is not particularly limited. Any containers commonly used for drinks, such as resin containers including PET bottles, paper containers including paper cartons, glass containers including glass bottles, metal containers including aluminum cans and steel cans, and aluminum pouches, are available.

### 2. Method for Producing Composition

An aspect of the present invention is a method for producing a composition, the method including a step of adjusting the caffeine content of the composition to 1 to 190 mg/100 mL and a step of adjusting the cycloalanylalanine content of the composition to 0.0006 to 14 mg/100 mL. The method for producing the composition according to the present invention preferably includes a step of adjusting the caffeine content of the composition to 5 to 120 mg/100 mL, 6 to 110 mg/100 mL, 7 to 100 mg/100 mL, or 10 to 90 mg/100 mL and a step of adjusting the cycloalanylalanine content of the composition to 0.0018 to 7.2 mg/100 mL, 0.0020 to 7.0 mg/100 mL, 0.005 to 5.0 mg/100 mL, or 0.01 to 2.4 mg/100 mL. In particular, the method for producing the composition according to the present invention more preferably includes both a step of adjusting the caffeine content of the composition to 6 to 110 mg/100 mL and a step of adjusting the cycloalanylalanine content of the composition to 0.0020 to 7.0 mg/100 mL, and further preferably both a step of adjusting the caffeine content of the composition to 10 to 90 mg/100 mL and a step of adjusting the cycloalanylalanine content of the composition to 0.01 to 2.4 mg/100 mL.

The method for producing the composition according to the present invention preferably includes a step of adjusting the cycloalanylalanine content (mg/100 mL) (X) and the caffeine content (mg/100 mL) (Y) so that the relations Y ≤ 240log₁₀(X) + 720 and Y ≥ 1.5log₁₀(X) + 4.5 will be satisfied. In addition, the method for producing the composition according to the present invention more preferably includes a step of adjusting the cycloalanylalanine content (mg/100 mL) (X) and the caffeine content (mg/100 mL) (Y) so that the relations Y ≤ 50log₁₀(X) + 150, Y ≥ 4log₁₀(X) + 12, and X ≤ 7.0 will be satisfied.

Also, it is preferable that the method for producing the composition according to the present invention further include a step of adjusting the ratio between the caffeine content (mg/100 mL) and the cycloalanylalanine content (mg/100 mL), caffeine content/cycloalanylalanine content, to 20 to 5000.

In the method for producing the composition according to the present invention, there are no particular limitations on the method for adjusting the caffeine content and the cycloalanylalanine content and the method for adjusting the ratio of the caffeine content/cycloalanylalanine content. For example, the content and the ratio can be adjusted to predetermined ranges by blending caffeine and cycloalanylalanine. The method for blending caffeine and cycloalanylalanine is not particularly limited. For example, a commercially available or synthetic caffeine or cycloalanylalanine product may be blended, or a raw material containing caffeine or cycloalanylalanine may be blended. The ranges of the caffeine content and the cycloalanylalanine content and the range of the ratio of the caffeine content/the cycloalanylalanine content are as described above.

As described above, the type of the composition produced according to the present invention is not particularly limited as long as the composition contains caffeine. Examples thereof include drugs (pharmaceutical compositions) and foods and drinks (including foods, drinks, food and drink compositions, food compositions, and drink compositions). The composition produced according to the present invention is preferably a drink, more preferably a green tea drink or a coffee drink.

The method for producing the composition according to the present invention may include a step of blending an additive or the like that is commonly blended into a composition and a step of filling the composition into a container. The types of the additive and the container are as described above. A known method can be used as the filling method.

### 3. Method for Suppressing Bitterness of Caffeine and Method for Suppressing Astringency of Cycloalanylalanine

An embodiment of the present invention is a method for suppressing bitterness of caffeine in a composition, the method including a step of adjusting the caffeine content of the composition to 1 to 190 mg/100 mL and a step of adjusting the cycloalanylalanine content of the composition to 0.0006 to 14 mg/100 mL. Another embodiment of the present invention is a method for suppressing astringency of cycloalanylalanine in a composition, the method including a step of adjusting the caffeine content of the composition to 1 to 190 mg/100 mL and a step of adjusting the cycloalanylalanine content of the composition to 0.0006 to 14 mg/100 mL. The method for suppressing bitterness of caffeine and the method for suppressing astringency of cycloalanylalanine in the composition according to the present invention preferably include a step of adjusting the caffeine content of the composition to 5 to 120 mg/100 mL, 6 to 110 mg/100 mL, 7 to 100 mg/100 mL, or 10 to 90 mg/100 mL and a step of adjusting the cycloalanylalanine content of the composition to 0.0018 to 7.2 mg/100 mL, 0.0020 to 7.0 mg/100 mL, 0.005 to 5.0 mg/100 mL, or 0.01 to 2.4 mg/100 mL, more preferably include both a step of adjusting the caffeine content of the composition to 6 to 110 mg/100 mL and a step of adjusting the cycloalanylalanine content of the composition to 0.0020 to 7.0 mg/100 mL, and further preferably include both a step of adjusting the caffeine content of the composition to 10 to 90 mg/100 mL and a step of adjusting the cycloalanylalanine content of the composition to 0.01 to 2.4 mg/100 mL.

The methods preferably include a step of adjusting the cycloalanylalanine content (mg/100 mL) (X) and the caffeine content (mg/100 mL) (Y) so that the relations Y ≤ 240log₁₀(X) + 720 and Y ≥ 1.5log₁₀(X) + 4.5 will be satisfied. In addition, the method for producing the composition according to the present invention more preferably includes a step of adjusting the cycloalanylalanine content (mg/100 mL) (X) and the caffeine content (mg/100 mL) (Y) so that the relations Y ≤ 50log₁₀(X) + 150, Y ≥ 4log₁₀(X) + 12, and X ≤ 7.0 will be satisfied.

Also, the methods may further include a step of adjusting the ratio between the caffeine content (mg/100 mL) and the cycloalanylalanine content (mg/100 mL), caffeine content/cycloalanylalanine content, to 20 to 5000.

As described above, the type of the composition in the methods according to the present invention is not particularly limited as long as the composition contains caffeine. Examples thereof include drugs (pharmaceutical compositions) and foods and drinks (including foods, drinks, food and drink compositions, food compositions, and drink compositions). The composition in the methods according to the present invention is preferably a drink, more preferably a green tea drink or a coffee drink.

In addition, the methods may include a step of blending an additive or the like that is commonly blended into a composition and a step of filling the composition into a container. The method for adjusting the caffeine content and the cycloalanylalanine content, the content ranges thereof, the range of the ratio of the caffeine content/the cycloalanylalanine content, and the like are as described above.

### EXAMPLES

The present invention will be more specifically described below based on Examples. The present invention is not limited to these Examples.

### Example 1: Evaluation of Effect of Cycloalanylalanine on Bitterness of Caffeine

Sample drinks were prepared by variously changing the caffeine content and the cycloalanylalanine content of the drink, and were each subjected to a sensory evaluation test. The method for preparing the sample drinks and the sensory evaluation test method will be described below.

### <Sample Drinks 1 to 17>

Sample Drinks 1 to 17 were prepared by mixing caffeine (undiluted concentration: 10 mg/mL) and cycloalanylalanine (undiluted concentration: 1 mg/mL) so that the resulting sample drinks had a caffeine content of 0, 5, 10, 50, 90, 120, and 200 mg/100 mL respectively and so that the resulting sample drinks had a cycloalanylalanine content of 0.0005, 0.0018, 0.01, 0.1, 2.4, 7.2, and 15 mg/100 mL respectively. As caffeine and cycloalanylalanine, chemically synthesized preparations were used.

### <Sample Drinks 18 and 19>

Sample Drinks 18 and 19 were prepared by blending 0.1 g of the heat-treated soybean peptide product (soybean extract) or 0.1 g of the heat-treated tea peptide product (tea extract) into the sample drink and mixing caffeine with a heat-treated soybean peptide product or a heat-treated tea peptide product so that the caffeine content of the sample drink was 50 mg/100 mL. Table 1 shows the caffeine content and the cycloalanylalanine content of Sample Drinks 18 and 19. The heat-treated soybean peptide product and the heat-treated tea peptide product were prepared as follows.

### (1) Preparation of Heat-Treated Soybean Peptide Product

As the heat-treated soybean peptide product, a product obtained by heat-treating and then freeze-drying a soybean peptide was used. The heat-treated soybean peptide product was produced by a high-pressure high-temperature treatment of the soybean peptide in a liquid. Specifically, about 15 mL of distilled water was added to 3 g of a soybean peptide (Hinute-AM, manufactured by Fuji Oil Co., Ltd.), and the mixture was subjected to a high-pressure high-temperature treatment at 135°C, under 0.31 MPa, for 3 hours in an autoclave (manufactured by Tomy Seiko Co., Ltd.). The resulting product was then freeze-dried to provide a heat-treated soybean peptide product (soybean extract) powder.

### (2) Preparation of Heat-Treated Tea Peptide Product

As a plant body, the first picking of tea leaves (cultivar: Yabukita, total nitrogen: 6.3%) produced in Kagoshima Prefecture was used. A pretreatment (three pre-extractions) was first performed on the tea to reduce water-soluble proteins. In other words, 200 g of boiling water was added to 10 g of the tea, and the mixture was stirred as appropriate to perform an extraction for 5 minutes. After the extraction, the mixture was filtered through a 140-mesh filter, and the extraction residue (used tea leaves) was collected. To the used tea leaves, 200 g of boiling water was added, an extraction was performed for 5 minutes, and the used tea leaves were collected. The same extraction treatment was performed again on the used tea leaves, and the used tea leaves were collected.

Subsequently, the tea (used tea leaves) having undergone the pre-extractions was subjected to a decomposition treatment using an enzyme. To the (whole) used tea leaves, 200 g of hot water at 50°C was added, and 1 g of a protease (trade name: Protin NY100, manufactured by Daiwa Fine Chemicals Co., Ltd.) was then added. The reaction was allowed to proceed for 3 hours in a water bath at 55°C with stirring (300 rpm) with a stirring bar. The mixture was then kept at 95°C for 30 minutes to deactivate the enzyme.

This enzyme-treated solution in the form of a mixture of the tea and the liquid was heat-treated without being subjected to solid-liquid separation. The heat treatment was performed in an autoclave (manufactured by Tomy Seiko Co., Ltd.) at 135°C for 3 hours using a high-temperature high-pressure fluid. The solution having undergone the treatment was filtered through a 140-mesh filter to provide a heat-treated tea peptide product. The product was then freeze-dried to provide a heat-treated tea peptide product (tea extract) powder.

### <Sample Drinks 20 to 23>

Sample Drinks 20 to 23 were prepared by blending cycloalanylalanine (chemically synthesized product) or a heat-treated soybean peptide product into a commercially available green tea or coffee drink. Cycloalanylalanine was blended by adding 0.1 mL of an undiluted solution having a concentration of 1 mg/mL, and 0.1 g of the heat-treated soybean peptide product prepared by the above method was blended. Table 1 shows the caffeine content and the cycloalanylalanine content of Sample Drinks 20 to 23.

### <Sensory Evaluation Test>

Sensory evaluation was performed on Sample Drinks 1 to 23 by three professional panelists. Specifically, each professional panelist gave scores based on the following criteria. Table 1 shows the average scores. A drink having an average score of three or more was considered to be a preferable drink.

### (Criteria for Sensory Evaluation)

5: The effect of cycloalanylalanine is remarkable, the balance of flavors is good, and the drink is very preferable for drinking.
4: The drink has a good balance between bitterness of caffeine and astringency of cycloalanylalanine and is preferable for drinking.
3: The drink has an acceptable balance between bitterness of caffeine and astringency of cycloalanylalanine in some way and is drinkable.
2: Although bitterness derived from caffeine is masked by cycloalanylalanine, bitterness is intensely felt, or astringency derived from cycloalanylalanine is intensely felt. Drinking in a preferable manner is not possible.
1: Bitterness derived from caffeine or astringency derived from cycloalanylalanine is too strong to drink in a preferable manner.

**[Table 1]**

| | Cycloalanylalanine (mg/100 mL) | | Caffeine (mg/100 mL) | | Evaluation result |
|---|---|---|---|---|---|
| | Reagent | Extract | Reagent | Drink (commercially available product) | |
| 1 | 0.1000 | | 0 | | 1 |
| 2 | 7.2000 | | 0 | | 1 |
| 3 | 0.1000 | | 5 | | 4 |
| 4 | 7.2000 | | 5 | | 3 |
| 5 | 0.0100 | | 10 | | 5 |
| 6 | 2.4000 | | 10 | | 4 |
| 7 | 15.0000 | | 10 | | 1 |
| 8 | 0.0018 | | 50 | | 4 |
| 9 | 0.1000 | | 50 | | 5 |
| 10 | 7.2000 | | 50 | | 4 |
| 11 | 0.0005 | | 90 | | 2 |
| 12 | 0.0100 | | 90 | | 4 |
| 13 | 2.4000 | | 90 | | 5 |
| 14 | 0.0018 | | 120 | | 3 |
| 15 | 0.1000 | | 120 | | 4 |
| 16 | 0.1000 | | 200 | | 1 |
| 17 | 7.2000 | | 200 | | 1 |
| 18 | | 0.076 (Soybean extract) | 50 | | 5 |
| 19 | | 0.065 (Tea extract) | 50 | | 5 |
| 20 | 0.1000 | | | 10 (Green tea) | 4 |
| 21 | 0.1000 | | | 50 (Coffee) | 5 |
| 22 | | 0.076 (Soybean extract) | | 10 (Green tea) | 4 |
| 23 | | 0.076 (Soybean extract) | | 50 (Coffee) | 5 |

As shown in Table 1, the drinks each having a caffeine content and a cycloalanylalanine content within the respective ranges of the present invention all had a sensory evaluation score of three or more. It has therefore been revealed that these drinks have good balances between bitterness of caffeine and astringency of cycloalanylalanine and have excellent drinkability. Also, it has been shown that the effect of the present invention is also obtained when cycloalanylalanine is adjusted using the heat-treated soybean peptide product or the heat-treated tea peptide product. In addition, it has also shown that the effect of the present invention is also obtained when the caffeine content and the cycloalanylalanine content are adjusted by blending a chemically synthesized cycloalanylalanine product or the heat-treated soybean peptide product into a commercially available green tea or coffee drink. Therefore, it has been revealed that the present invention can actualize a drink, in which unpleasant bitterness caused by caffeine is suppressed, having a good balance between good bitterness peculiar to caffeine and astringency peculiar to cycloalanylalanine and having preferable flavor by adjusting the caffeine content and the cycloalanylalanine content of the drink to the ranges of the present invention.

### INDUSTRIAL APPLICABILITY

The present invention provides new means for preparing a composition having a good flavor in which unpleasant bitterness caused by caffeine in the composition is suppressed. The present invention thus has high industrial applicability.

## Claims

1. A composition having:
a caffeine content of 1 to 190 mg/100 mL; and
a cycloalanylalanine content of 0.0006 to 14 mg/100 mL.

2. The composition according to claim 1, wherein the cycloalanylalanine content is 0.0020 to 7.0 mg/100 mL.

3. The composition according to claim 1 or 2, wherein the caffeine content is 6 to 110 mg/100 mL.

4. The composition according to any one of claims 1 to 3, wherein the cycloalanylalanine content (mg/100 mL) (X) and the caffeine content (mg/100 mL) (Y) satisfy Y ≤ 240log₁₀(X) + 720 and Y ≥ 1.5log₁₀(X) + 4.5.

5. The composition according to any one of claims 1 to 3, wherein the cycloalanylalanine content (mg/100 mL) (X) and the caffeine content (mg/100 mL) (Y) satisfy all of Y ≤ 50log₁₀(X) + 150, Y ≥ 4log₁₀(X) + 12, and X ≤ 7.0.

6. The composition according to claim 3, wherein a ratio between the caffeine content (mg/100 mL) and the cycloalanylalanine content (mg/100 mL), caffeine content/cycloalanylalanine content, is 20 to 5000.

7. The composition according to any one of claims 1 to 6, wherein cycloalanylalanine is derived from a heat-treated animal or plant peptide product.

8. The composition according to claim 7, wherein the animal or plant peptide is obtained from a soybean peptide, a tea peptide, a malt peptide, a whey peptide, or a collagen peptide.

9. The composition according to any one of claims 1 to 8, being a drink.

10. The composition according to claim 9, wherein the drink is a coffee drink.

11. The composition according to claim 9, wherein the drink is a green tea drink.

12. The composition according to any one of claims 9 to 11, being a packaged drink.

13. A method for producing a composition, the method comprising:
adjusting a caffeine content of a composition to 1 to 190 mg/100 mL; and
adjusting a cycloalanylalanine content of the composition to 0.0006 to 14 mg/100 mL.

14. The method according to claim 13, comprising adjusting the cycloalanylalanine content of the composition to 0.0020 to 7.0 mg/100 mL.

15. The method according to claim 13 or 14, comprising adjusting the caffeine content of the composition to 6 to 110 mg/100 mL.

16. The method according to any one of 13 to 15, wherein the composition is a drink.

17. A method for suppressing bitterness of caffeine in a composition, the method comprising:
adjusting a caffeine content of the composition to 1 to 190 mg/100 mL; and
adjusting a cycloalanylalanine content of the composition to 0.0006 to 14 mg/100 mL.

18. A method for suppressing astringency of cycloalanylalanine in a composition, the method comprising:
adjusting a caffeine content of the composition to 1 to 190 mg/100 mL; and
adjusting a cycloalanylalanine content of the composition to 0.0006 to 14 mg/100 mL.

19. The method according to claim 17 or 18, comprising adjusting the cycloalanylalanine content of the composition to 0.0020 to 7.0 mg/100 mL.

20. The method according to any one of claims 17 to 19, comprising adjusting the caffeine content of the composition to 6 to 110 mg/100 mL.

21. The method according to any one of claims 17 to 20, wherein the composition is a drink.
